**Europäisches Patentamt**

**European Patent Office**

**Office européen des brevets**

(19)

(11) Veröffentlichungsnummer: **0 240 596**
**B1**

(12)

# EUROPÄISCHE PATENTSCHRIFT

(45) Veröffentlichungstag der Patentschrift:
**13.09.89**

(21) Anmeldenummer: **86113834.5**

(22) Anmeldetag: **06.10.86**

(51) Int. Cl.⁴: **E04D 5/12, E04D 5/10**

(54) **Thermoplastische Abdichtungsbahn.**

(30) Priorität: **09.04.86 DE 3611939**

(43) Veröffentlichungstag der Anmeldung:
**14.10.87 Patentblatt 87/42**

(45) Bekanntmachung des Hinweises auf die Patenterteilung:
**13.09.89 Patentblatt 89/37**

(84) Benannte Vertragsstaaten:
**AT BE CH DE FR GB IT LI NL SE**

(56) Entgegenhaltungen:
**WO-A-86/02040**
**DD-A-21 156**
**DE-A-2 945 884**

(73) Patentinhaber: **Niederberg-Chemie GmbH,**
**Postfach 11 63, D-4133 Neukirchen-Vluyn(DE)**

(72) Erfinder: **Schlütter, Aloys, Rheinstrasse 42,**
**D-4152 Kempen 3(DE)**

ACTORUM AG

## Beschreibung

Die Erfindung betrifft eine Abdichtung für Dächer bestehend aus mehreren nebeneinander verlegten thermoplastischen Abdichtungsbahnen, insbesondere Dachbahnen, die an den Stoßstellen verschweißt sind, wobei jede Bahn zumindest einseitig unter Freilassung eines Schweißrandes mit einem Vlies kaschiert ist.

Es ist bekannt, wie z.B. aus der DE-A 2 945 884, daß thermoplastische Dachbahnen mit einem Vlies kaschiert werden. Dieses Vlies ermöglicht eine gewisse Stabilisierung des Ausdehnungskoeffizienten. Außerdem ermöglicht es eine Verklebung der Bahnen mit dem Untergrund.

Bei Abdichtungsbahnen wird ein gleichmäßiger Ausdehnungskoeffizient angestrebt.

Der Erfindung liegt die Aufgabe zugrunde, das Dehnungsverhalten weiter zu vergleichmäßigen. Dabei geht die Erfindung von dem Gedanken aus, daß insbesondere der Randbereich der Abdichtungsbahnen, d. h. auch der Schweißrandbereich der Abdichtungsbahnen, im Dehnungsverhalten beeinträchtigt ist.

Nach der Erfindung wird dieser Beeinträchtigung dadurch entgegengewirkt, daß das Vlies an den Schweißnahtstellen mit eingebunden wird. Dazu ist vorgesehen, daß die Schweißnaht die Vlieskaschierung überlappt und die beim Schweißen an der Schweißstelle plastifizierte Abdichtungsbahn das Vlies durchdringt.

Beim Heißluftverschweißen kommt dem entgegen, daß die Heißluft die thermoplastische Dichtungsbahn stark aufschmilzt und somit das Vlies beim Andruck auf die gegenüberliegende Bahn verklebt.

Bei der Anwendung von Heizkeilgeräten ist dieses Verfahren der Vlieseinbindung in die Schweißnaht ohne weiteres nicht möglich, da die Dichtungsbahn oberflächig nur sehr dünn angeschmolzen wird und somit eine befriedigende Vlieseinbindung kaum erreicht wird.

In weiterer Ausbildung der Erfindung wird eine ausreichende Vlieseinbindung auch bei der Heizkeilverschweißung dadurch erreicht, daß das Vlies im Überlappungsbereich mit Ausnehmungen versehen ist. Beim Kaschieren des Vlieses dringt dann die plastische Masse durch die Ausnehmungen, so daß ebenflächig zur eigentlichen Schweißnahtfläche zusätzliche Schweißflächen parallellaufend angeboten werden. Diese Schweißflächen kann der Heizkeil leicht erfassen und mit der darunterliegenden Bahnenfläche homogen verbinden. Das Vlies ist somit fest in der Schweißnaht verankert.

Die Ausnehmungen werden wahlweise durch Lochungen herbeigeführt. Die Löcher haben eine Durchmesser zwischen 3 und 7 mm, vorzugsweise 5 mm.

Die Löcher haben untereinander und/oder zum vliesfreien Schweißrand einen Abstand von 0,5 bis 1 cm. Je nach der Belastung bzw. Ausbildung der Abdichtungsbahn ist eine Reihe von Löchern oder sind mehrere Reihen von Löchern vorgesehen.

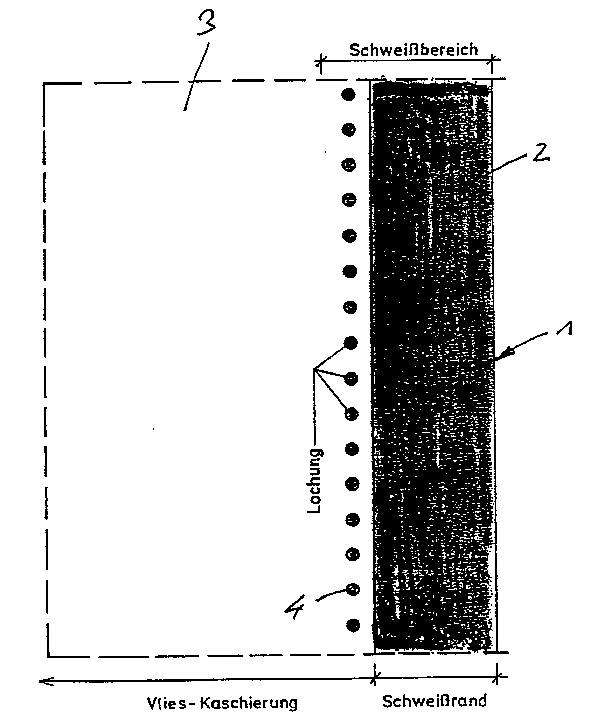

In der Zeichnung ist ein Ausführungsbeispiel der Erfindung dargestellt.

Mit 1 ist der Ausschnitt einer Abdichtungsbahn bezeichnet, die im Ausführungsbeispiel mit einer Breite von 1 oder 2 m verlegt wird. Die Längen sind weitgehend beliebig, sie können 100 m und mehr betragen. Größere Breiten als 2 m werden vorzugsweise dadurch hergestellt, daß die Abdichtungsbahnen unter Überlappung im Randbereich nebeneinander gelegt werden. In diese Überlappungsbereich werden die Abdichtungsbahnen dann miteinander verschweißt.

Im Ausführungsbeispiel besteht die Abdichtungsbahn wahlweise aus Polyäthylen hoher Dichte, Polyäthylen niederer Dichte, Äthylencopolymerisat-Bitumen, Polyvinylchlorit weich, chlorisiertes Polyäthylen oder einfachen Bitumenbahnen. Die Schweißung erfolgt vorzugsweise durch Heißluft- oder Heizelementschweißen, insbesondere unter Verwendung von Heizkeilen.

Für die Schweißung ist wesentlich, daß die Abdichtungsbahn an der Unterseite mit einer Vlieskaschierung versehen ist. Als Vlies wird vorzugsweise ein Glasfaservlies 3 verwendet, welches unter Freilassung eines Schweißrandes 2 auf die Unterseite der Bahn 1 aufkaschiert ist.

Der vliesfreie Schweißrand besitzt eine geringere Breite als der von dem Schweißvorgang erfaßte Überlappungsbereich der Abdichtungsbahnen. Dieser Überlappungsbereich ist in der Zeichnung als Schweißbereich beschrieben. Infolgedessen überlappt auch das Faservlies 3 in den Schweißbereich.

Beim Schweißen wird der gesamte Schweißbereich an der Unterseite der Bahn 1 aufgeschmolzen, wenn eine Heißluftschweißung vorgesehen ist. Durch Andrücken verklebt die Abdichtungsbahn auch im Überlappungsbereich des Vlieses mit der darunterliegenden Bahn.

Bei der Verwendung von Heizelementen, insbesondere Heizkeilgeräten wird die Bahnunterseite nur geringfügig aufgeschmolzen. Um gleichwohl auch im Überlappungsbereich des Vlieses eine Einbindung des Vlieses in dei Schweißnaht zu erreichen, ist das Vlies mit einer Reihe Löchern 4 versehen. Die Löcher 4 haben einen Durchmesser von 5 mm und zueinander einen Abstand von 1 cm, zum vliesfreien Schweißrand einen Abstand von 0,5 cm. Beim Aufkaschieren des Vlieses 3 auf die Bahn 1 ist die plastische Masse der Bahn in die Löcher 4 eingedrungen und hat dort eine zur Vliesunterseite im wesentlichen ebene Fläche gebildet. Von dem Heizkeil werden diese Flächen mit erfaßt und ausreichend mit aufgeschmolzen, so daß im Bereich der Löcher eine zusätzliche Verschweißung der Abdichtungsbahn 1 mit der darunterliegenden Bahn 1 unter Einbindung des Vlieses 3 in die Schweißnaht erfolgt.

## Patentansprüche

1. Abdichtung für Dächer bestehend aus mehreren nebeneinander verlegten thermoplastischen Abdichtungsbahnen, die an den Stoßstellen verschweißt sind, wobei jede Bahn zumindest einseitig unter Freilassung eines Schweißrandes mit einem Vlies kaschiert ist, dadurch gekennzeichnet, daß die Schweißnaht die Vlieskaschierung (3) überlappt und die beim Schweißen plastifizierte Bahn (1) im Überlappungsbereich das Vlies (3) durchdringt.

2. Abdichtung nach Anspruch 1, dadurch gekennzeichnet, daß für eine Heizkeilschweißung im Überlappungsbereich Ausnehmungen (4) im Vlies (3) vorgsehen sind.

3. Abdichtung nach Anspruch 2, gekennzeichnet durch Lochungen.

4. Abdichtung nach Anspruch 3, dadurch gekennzeichnet, daß die Löcher einen Durchmesser von 3 - 7 mm aufweisen und voneinander und/oder vom vliesfreien Schweißrand einen Abstand von 0,5 - 1 cm aufweisen.

5. Abdichtung nach Anspruch 3 oder 4, gekennzeichnet durch eine oder mehrere Lochreihen.

## Claims

1. Seal for roofs, consisting of several thermoplastic sealing sheets laid alongside one another, which are sealed (welded) together at the joints, each sheet being laminated with a non-woven, at least on one face, leaving a sealing border (welding border) exposed, characterized in that the weld seam overlaps the non-woven laminated layer (3) and the sheet (1), plasticized in sealing (welding), penetrates through the non-woven (3) in the overlap zone.

2. Seal according to Claim 1, characterized in that, for a welding by heating blade in the overlap zone, apertures (4) are provided in the non-woven (3).

3. Seal according to Claim 2, characterized by perforations.

4. Seal according to Claim 3, characterized in that the holes have a diamter of 3–7 mm and are spaced apart and/or from the sealing border (welding border) that is free of non-woven by a distance of 0.5–1 cm.

5. Seal according to Claim 3 or 4, characterized by one or more rows of holes.

## Revendications

1. Etanchéité pour toitures, composée de plusieurs feuilles d'étanchéité thermoplastiques disposées l'une à côté de l'autre qui sont soudées aux endroits des joints, chaque feuille étant garnie au moins d'un côté, en laissant libre un bord de soudage, au moyen d'une nappe non tissée, caractérisée en ce que le joint de soudage recouvre la nappe de garniture (3) et en ce que la feuille (1) plastifiée lors du soudage traverse la nappe (3) dans la région de recouvrement.

2. Etanchéité conforme à la revendication 1, caractérisée en ce qu'il est prévu des évidements (4) dans la nappe (3) en vue d'un soudage par languettes chauffantes.

3. Etanchéité conforme à la revendication 2, caractérisée par des perforations.

4. Etanchéité conforme à la revendication 3, caractérisée en ce que les trous ont un diamètre de 3 à 7 mm et sont à une distance de 0,5 à 1 cm du bord de soudage exempt de nappe.

5. Etanchéité conforme à l'une des revendications 3 ou 4, caractérisée par une ou plusieurs rangées de trous.

EP 0 240 596 B1

Schweißbereich

3

2

1

Lochung

4

Vlies-Kaschierung

Schweißrand